# EUROPEAN PATENT SPECIFICATION

(11) **EP 1 685 170 B1**
(45) Date of publication and mention of the grant of the patent: **19.08.2009**
(21) Application number: 04798167.5
(22) Date of filing: 05.11.2004
(51) Int. Cl.: C08F 220/18, C09J 133/06, C08F 2/26

(54) **ADHESIVE COMPOSITION**
KLEBSTOFFZUSAMMENSETZUNG
COMPOSITION D'ADHESIF

(30) Priority: 07.11.2003 US 517870 P
(43) Date of publication of application: 02.08.2006
(73) Proprietor: CYTEC SURFACE SPECIALTIES, S.A., 1070 Bruxelles (BE)
(72) Inventor: PERNECKER, Tibor, Wilbraham, Massachusetts 01095 (US); CHEN, Augustin, SURFACE SPECIALTIES, INC., Springfield, Massachusetts 01151 (US); GUO, Jong-Shing, SURFACE SPECIALTIES, INC., Springfield, Massachusetts 01151 (US)
(74) Representative: Destryker, Elise Martine
(86) International application number: PCT/EP2004/052827
(87) International publication number: WO 2005/044880

(56) References cited:
- EP-A- 0 304 788
- WO-A-03/006517

## Description

The present invention relates to the field of adhesives for example pressure sensitive adhesives (PSAs) and processes for making such adhesives.

A conventional PSA comprises a polymer formulation which is often applied as a clear layer between the substrate to be adhered (such as a label) and a release layer (such as a silicone coated film). For safety health and environmental reasons it is desirable that the process for making and applying PSAs minimises production of for example volatile organic compounds (VOCs) or waste organic solvents. For these reasons waterborne PSAs are increasingly preferred.

It is also desirable for the PSA coating to remain clear for many uses where aesthetic appearance is important such as applying a transparent label to an article to create a no-look label (e.g. on a beverage bottle). However articles labelled with PSA labels (e.g. beverage bottles) can be subject to extremes of temperature and humidity. For example bottles are pasteurised after filling using water or steam at high temperatures. During use beverage bottles may be chilled by immersion in chilled water or ice. Under such conditions a clear PSA coating can lose its transparency and whiten. This can spoil the illusion of a no-label look appearance and is a particular issue for water borne PSAs.

Many pressure sensitive adhesives are formed by emulsion polymerisation. Without wishing to be bound by any mechanism the applicant believes that during initiation of polymerisation by conventional redox initiating agents some undesirable inorganic components can be formed or remain within the polymer (such as initiators, buffer salts and inorganic hydrophilic salts). It is believed that these components gradually precipitate when the polymer dries and form hydrophilic islands within the adhesive coating. These islands can absorb huge quantities of water which may grow in size to be sufficiently large to scatter incident light. This increases the opacity of an otherwise clear PSA coating.

Prior art PSA formulations are described in the following references.

WO03/006517 (Solutia) describes a method of preparing PSA, by adding pre-emulsion of monomers to mixture consisting of water, water-soluble and/or water dispersible polymerizable surfactant, and polymerization initiator.

WO01/85867 (Ashland) describes PSA made from aqueous latex emulsions which have an average particle size of below 100 nanometres and comprise specific cationic polymerizable ethoxylated alkyl phenol sulfate emulsifiers such as Hitenol BC-10 available commercially from Montello. Such emulsions are prepared by using redox initiating systems which have the disadvantages already mentioned.

It is an object of the present invention to provide improved water borne PSAs which have an Improved resistance to whitening by water,

Therefore broadly in accordance with the present invention there is provided a for preparing a pressure sensitive adhesive having enhanced resistance to water-whitening comprising the steps of:
(a) forming a mixture in water of
   (i) an effective initial amount of a thermal polymerization initiator and optional further surfactant;
   (ii) an effective amount of a water-dispersible polymerizable surfactant selected from: ethoxylated alkyl phenol sulfate surfactants,
(b) forming a polymerisable aqueous pre-emulsion comprising
   (i) a hydrophobic monomer mixture comprising at least one alkyl (metha)acrylate ester of an C₁₋₄alcohol and up to about 30% by weight of the mixture of at least one styrenic monomer,
   (ii) at least 1 % of the total weight of (i) to (iii) of one or more hydrophilic monomer(s),
   (iii) at least 5 % of the total weight of (i) to (iii) of at least one partially hydrophilic monomer(s) selected from N-vinyl pyrrolidone; alkyl (metha)acrylate esters of methanol or ethanol; and/or mixtures thererof,
   the pre-emulsion further comprising effective amounts of the surfactant; and
(c) contacting the pre-emulsion with the water mixture;
(d) continuously adding said pre-emulsion to said mixture to polymerize said pre-emulsion to form a latex emulsion, and optionally adding further polymerization initiator during the polymerization of said pre-emulsion; and
(e) optionally adjusting the pH of said latex emulsion with a suitable base to a pH 5 of about 6.5 to about 9.

The applicant has found that the best resistance to water whitening is achieved with a formulation where the hydrophilic monomer concentration (by total weight of components) (b)(i) to (b)(iii)) comprises from about 1% and 10 %, preferably from about 3 to about 6 %, most preferably from about 4% to about 5%.

Preferred hydrophilic monomers comprises acid functional monomer(s), more preferably selected from acrylic acid, methacrylic acid, oligomeric acrylic acid (beta-CEA) and mixtures thereof. Other similar acids may also be used.

In a further aspect of the present invention there is provided a pressure sensitive adhesive having enhanced resistance to water-whitening which is obtained or obtainable by the process of the invention described herein.

Preferably the polymerization initiator comprises a thermal initiator, more preferably comprises potassium persulfate.

Preferably the water-dispersible polymerizable surfactant comprises polymerisable ethoxylated alkyl phenol sulfate surfactants (such as those available commercially from Hitachi Chemical Company under the trade name Hitanol BC-2020

Preferably an adhesive composition of the invention comprises prior to polymerisation:
(a) an effective amount of a radical polymerization initiator
(b) polymerisable ethoxylated alkyl phenol sulfate surfactants; and
(c)
   (i) a hydrophobic monomer mixture comprising at least one alkyl (metha)acrylate ester of an C₁₋₄alcohol and up to about 30% by weight of the mixture of at least one styrenic monomer,
   (ii) at least about 1 % of the total weight of (i) to (iii) of one or more hydrophilic monomer(s),
   (iii) at least about 5 % of the total weight of (i) to (iii) of at least one partially hydrophilic monomer(s) selected from N-vinyl pyrrolidone; alkyl (metha)acrylate esters of methanol or ethanol; and/or mixtures thererof

The applicant has found that whitening of PSA due to water absorption can be reduced by minimising the amount of inorganic matter present in the dried waterborne PSA coating. Without wishing to be bound by any mechanism the applicant believes that this is achieved by replace conventional initiators based on a combination of redox components with initiators which produce radicals by a thermal decomposition. Thus persulfate initiators can be used with polymerizable surfactants to synthese an acrylic emulsion which can be dried as a clear coating onto a substrate to make an improved PSA with improved resistance to water whitening. Transparent labels fixed to a substrate with such clear PSAs remain substantially clear after immersion in water at 87°C for 60 minutes.

Preferably the average particle size of the polymer is less than or equal to 200nm.

The water whitening / water immersion tests used to test the adhesives of the invention where performed as follows. The release liners were removed thus exposing the polymer surfaces to water. UV / visible spectroscopy (UV / VIS) using a Cintra 40 UV-Visible spectrophotometer was used to determine absorbance. The coated Mylar film (facestock) was placed in a cuvette which was filled with water at time zero. The light absorbance was measured and recorded for 24 hr at 400 nm (room temperature). The final absorbance increase of the direct-coated film was recorded.

### PSAs according to the present invention exhibit improved water whitening resistance

The formulation has utility in for example clear label (beverage / beer bottle label) applications where waterborne PSA is subject to extremes of temperature, water and/or humidity such as during pasteurization or in a ice chest. By using the combination of potassium persulfate and Hitanol BC 2020 the applicant has found both the water whitening resistance and adhesion performance of the PSA can be improved.

Further features of the invention are described in the claims.

The invention will be illustrated by some no-limiting Examples:

### Example 1

A copolymer latex was prepared from acrylate and alpha methyl styrene as follows A monomer pre-emulsion was prepared by mixing 2-ethyl hexyl acrylate (307g), alpha-methyl styrene (45 g), methyl acrylate (65.86 g), methacrylic acid (9.56 g), acrylic acid (13.4 g), t-dodecyl mercaptane (0.6 g), water (135.8 g) and Hitanol BC-2020 (25.3 g). A two litre jacketed glass reactor (equipped with reflux condenser, thermocouple and twin blade agitator) was charged with water (310.11 g), potassium persulfate (1.18 g) and Hitanol BC-2020 (3.45 g). Separately a stock solution (2.86 % by weight) of potassium persulfate (72.12 g) was prepared. The reactor was heated with water and when the temperature reached 78°C then 6 g of the potassium persulfate stock solution was added. Using an automatic feeder the monomer pre-emulsion was added at a rate of 3.03 g per minute over then next 190 minutes.

The temperature was maintained at 83°C and the polymerization charge was agitated continuously at 240 rpm. Every 20 minutes a further 6 g of the potassium persulfate stock solution was added to the reactor for the next 220 minutes. After the final potassium persulfate charge was added, the reactor temperature was raised to 88 C for an additional 60 minutes. The reactor was held at 88°C for the next 60 minutes and then was cooled to room temperature and the latex was collected by filtration

The latex had a solid content of 51.52 %. This was determined by placing known amount of latex into a weighed aluminium weighing tin which was dried at 150°C for 60 minutes. The tin was weighed again to calculate the solids. The average latex particle size was 83 nm as measured by a Horiba laser light scattering particle size distribution analyzer model LA-910. The Brookfield viscosity of the latex was 4700 cp measured using a Brookfield viscometer LV II+ with spindle #3 at 30 rpm.

The pH of the latex was initially 2.35 as measured by an Orion model pH meter. The latex was than neutralized with ammonium hydroxide to a pH of 6.29.

### Test of PSA water whitening

The neutralized latex from Example 1 was coated on a Mylar film of thickness 1 mil (= 0.254 mm).. The film was air dried for 10 minutes and heat dried at 90°C for 5 minutes. The coated Mylar was laminated with a release liner. To test water whitening resistance the release liner was removed thus exposing the polymer surface to water. The coated Mylar film was immersed in an 88°C constant temperature water bath for 60 minutes. After 60 minutes the film's colour change was evaluated visually and rated on a scale from 0 to 5. Level 5 whitening indicates that the film turned matt white while level 0 means that the film remained clear, transparent without any visible discoloration. The colour change of the Mylar film coated with the PSA of Example 1 was rated 0 i.e., no whitening or discoloration of any kind was detected.

The following Comparative Example (Comp A) is intended to demonstrate the effect of using a redox initiating system t-butyl hydroperoxide used with zinc formaldehyde sulfoxylate (such as available commercially under the trade name Formopon). This is based on an example published in WO 01/85867 A1.

### COMP A.

The equipment used was the same as described in Example 1. The monomer pre-emulsion was prepared by mixing water (129.6 g), sodium bicarbonate (0.8 g), 2- ethyl hexyl acrylate (259.8 g), styrene (61.3 g), methyl methacrylate (30.66 g), methacrylic acid (4 g), alpha-CEA (oligomeric acrylic acid, 20g), t-butyl hydroperoxide (1.2 g), and Hitanol BC 1025 (25% solids, 14.85 g). The reactor was charged with water (236.2 g) and Hitanol BC-1025 (7.42 g). Separately two Formopon solutions were prepared. The Formopon start charge consists of 1.4 g Formopon dissolved in 10 g water and the Formopon stock solution is 1.4 g dissolved in 48 g water used for the incremental addition of Formopon to the reactor charge.

Thus, the reactor was heated with water. When the temperature reached 60°C 4% (approximately 20.3 g) of the pre-emulsion was added to the reactor charge. The reactor charge was agitated continuously at 240 rpm. At 70°C the Formopon start charge was added and the heating continued. When the temperature reached 80°C 1.4 g of Formopon solution was added and the monomer pre-emulsion was added at a rate of 2.7 g per minute rate for 180 minutes simultaneously with 1.4 g of Formopon stock solution added every 10 minutes also for 180 minutes. The temperature was maintained at 80°C throughout the entire reaction. Ten minutes after the monomer pre-emulsion and the previous Formopon stock solution had been added a further 2.5 g of Formopon stock solution was added and the reactor was held at 80°C for an additional 60 minutes. After 60 minutes the reactor was cooled down to 50°C water solution (2.5g) and t-butyl hydroperoxide (0.15 g) were added and the charge mixed for 10 minutes. After 10 minutes 2.5 g of Formopon stock solution was added and the reactor was held for 30 minutes at 50°C. After 50 minutes the charge was cooled down to room temperature and the latex was collected by filtration.

The latex had 48.7% solids and the particle size was 79 nm. The latex was neutralized with ammonium hydroxide to a pH of 7.02 and was direct coated on a 1 mil Mylar film. The film was prepared as described in Example 1 and tested for water whitening. After 60 minutes in water at 88°C the film turned matt white and a level 5 whitening was noted.

## Claims

1. A process for preparing a pressure sensitive adhesive having enhanced resistance to water-whitening comprising the steps of;
(a) forming a mixture in water of
(i) an effective initial amount of a thermal polymerization initiator and optional further surfactant;
(ii) an effective amount of a water-dispersible polymerizable surfactant selected from: ethoxylated alkyl phenol sulfate surfactants,
(b) forming a polymerizable aqueous pre-emulsion comprising
(i) a hydrophobic monomer mixture comprising at least one alkyl (metha)acrylate ester of an C₁₋₄alcohol and up to about 30% by weight of the mixture of at least one styrenic monomer,
(ii) at least 1 % of the total weight of (i) to (iii) of one or more hydrophilic monomer(s),
(iii) at least 5% of the total weight of (i) to (iii) of at least one partially hydrophilic monomer(s) selected from N-vinyl pyrrolidone; alkyl (metha)acrylate esters of methanol or ethanol; and/or mixtures thererof,
the pre-emulsion further comprising effective amounts of the surfactant; and
(c) contacting the pre-emulsion with the water mixture;
(d) continuously adding said pre-emulsion to said mixture to polymerize said pre-emulsion to form a latex emulsion, and optionally adding further polymerization initiator during the polymerization of said pre-emulsion; and
(e) optionally adjusting the pH of said latex emulsion with a suitable base to a pH 5 of about 6.5 to about 9.

2. , A process according to claim 1 wherein the thermal polymerization initiator is selected from persulfate initiators.

3. . A process according to claim 1 wherein the thermal polymerization initiator is potassium persulfate.

4. . An adhesive composition obtained by a process as claimed in any of claims 1 to 3.

5. . A label facestock comprising a pressure sensitive adhesive as claimed in claim 4.

6. . An article labelled using a label facestock as claimed in claim 5.

7. . A method for labelling an article comprising the steps of
(a) dispensing a label from a label facestock as claimed in claim 5, and
(b) adhering the dispensed label onto the article.

8. . A labelled article obtained by a method as described in claim 7.

## Patentansprüche

1. Verfahren zur Herstellung eines Haftklebers mit verbesserter Beständigkeit gegen Weißanlaufen durch Wasser, umfassend die Schritte:
(a) Bilden eines Gemisches in Wasser aus
(i) einer wirksamen Anfangsmenge eines Wärmepolymerisationsinitiators und optional ferner oberflächenaktivem Mittel;
(ii) einer wirksamen Menge eines Wasser-dispergierbaren polymerisierbaren oberflächenaktiven Mittels, ausgewählt aus: oberflächenaktiven ethoxylierten Alkylphenolsulfaten;
(b) Bilden einer polymerisierbaren wässerigen Voremulsion, umfassend
(i) ein hydrophobes Monomergemisch, umfassend mindestens einen Alkyl(meth)-acrylatester eines C₁₋₄-Alkohols und bis zu etwa 30 Gew.-% des Gemisches von mindestens einem Styrolmonomer,
(ii) mindestens 1 % des Gesamtgewichtes von (i) bis (iii) eines oder mehrerer hydrophiler Monomer(e),
(iii) mindestens 5 % des Gesamtgewichtes von (i) bis (iii) mindestens eines teilweise hydrophilen Monomers, ausgewählt aus N-Vinylpyrrolidon; Alkyl(meth)acrylat-estern von Methanol oder Ethanol und/oder Gemischen davon,
wobei die Voremulsion ferner wirksame Mengen des oberflächenaktiven Mittels umfasst; und
(c) Kontaktieren der Voremulsion mit dem Wassergemisch;
(d) kontinuierliches Zugeben der Voremulsion zu dem Gemisch, um die Voremulsion unter Bildung einer Latexemulsion zu polymerisieren, und gegebenenfalls Zugeben weiteren Polymerisationsinitiators während der Polymerisation der Voremulsion; und
(e) gegebenenfalls Einstellen des pH der Latexemulsion mit einer geeigneten Base auf einen pH 5 von etwa 6,5 bis etwa 9.

2. Verfahren nach Anspruch 1, wobei der Wärmepolymerisationsinitiator aus Persulfatinitiatoren ausgewählt ist.

3. Verfahren nach Anspruch 1, wobei der Wärmepolymerisationsinitiator Kaliumpersulfat ist.

4. Haftkleberzusammensetzung, erhalten durch ein Verfahren nach einem der Ansprüche 1 bis 3.

5. Etikettenträger, umfassend einen Haftkleber nach Anspruch 4.

6. Gegenstand, etikettiert unter Verwendung eines Etikettenträgers nach Anspruch 5.

7. Verfahren zum Etikettieren eines Gegenstandes, umfassend die Schritte
(a) Abziehen eines Etiketts von einem Etikettenträger nach Anspruch 5 und
(b) Kleben des abgezogenen Etiketts auf den Gegenstand.

8. Etikettierter Gegenstand, erhalten durch ein wie in Anspruch 7 beschriebenes Verfahren.

## Revendications

1. Procédé de préparation d'un autocollant ayant une résistance améliorée au blanchissement à l'eau, comprenant les stades dans lesquels :
(a) on forme un mélange dans l'eau
(i) d'une quantité initiale efficace d'un amorceur de polymérisation thermique et éventuellement d'un autre agent tensioactif ;
(ii) d'une quantité efficace d'un agent tensioactif dispersable dans l'eau et polymérisable, sélectionné parmi les agents tensioactifs de phénolsulfate d'alcoyle éthoxylé ;
(b) on forme une pré-émulsion aqueuse, polymérisable comprenant
(i) un mélange hydrophobe de monomères, comprenant au moins un (métha) acrylate d'alcoyle d'un alcool ayant de 1 à 4 atomes de carbone et jusqu'à environ 30% en poids du mélange d'au moins un monomère styrénique,
(ii) au moins 1% du poids total de (i) à (iii) d'un monomère hydrophile ou de plusieurs monomères hydrophiles,
(iii) au moins 5 % du poids total de (i) à (iii) d'au moins un monomère(s) partiellement hydrophile choisi parmi la N-vinyle pyrrolidone ; un (métha) acrylate d'alcoyle de méthanol ou d'éthanol ; et/ou leurs mélanges,
la pré-émulsion comprenant, en outre, des quantités efficaces de l'agent tensioactif ; et
(c) on met la pré-émulsion en contact avec le mélange dans l'eau ;
(d) on ajoute continuellement la pré-émulsion audit mélange pour polymériser la pré-émulsion en une émulsion de latex, et éventuellement on ajoute, en outre, un amorceur de polymérisation pendant la polymérisation de la pré-émulsion ; et
(e) on règle éventuellement le pH de l'émulsion de latex par une base appropriée à un pH allant de 5 à 6,5 jusqu'à environ 9.

2. Procédé suivant la revendication 1, dans lequel on choisit l'amorceur de polymérisation thermique parmi des amorceurs au persulfate.

3. Procédé suivant la revendication 1, dans lequel l'amorceur de polymérisation thermique est le persulfate de potassium.

4. Composition adhésive obtenue par un procédé tel que revendiqué dans l'une quelconque des revendications 1 à 3.

5. Papier d'étiquette comprenant un autocollant tel que revendiqué à la revendication 4.

6. Objet étiqueté utilisant un papier d'étiquette, tel que revendiqué à la revendication 5.

7. Procédé d'étiquetage d'un objet comprenant les stades
dans lesquels
(a) on détache une étiquette d'un papier d'étiquette, tel que revendiqué à la revendication 5, et
(b) on fait adhérer l'étiquette détachée à l'objet.

8. Objet étiqueté obtenu par le procédé tel que décrit dans la revendication 7.
